# EUROPEAN PATENT APPLICATION

(11) **EP 1 848 097 A1**
(43) Date of publication of application: **24.10.2007**
(21) Application number: 06008189.0
(22) Date of filing: 20.04.2006
(51) Int. Cl.: H02K 53/00

(54) **Energy-saving environmentally friendly generator**

(71) Applicant: Lin, Chu-Fu, Tainan County (TW)
(72) Inventor: Lin, Chu-Fu, Tainan County (TW)
(74) Representative: Casalonga, Axel

(57) **Abstract**

An energy-saving environmentally friendly generator includes at least one generator (1; 1a, 1b) for generating electricity, at least one weighting system (11), at least one transmission gear system (3), at least one starting system (2), and at least one electricity-conveying system (5). The generator is started to generate electricity. Based on the principle of relative theory of large/small gears and through the transmission gears (12, 21, and 41) of various sizes in the transmission gear system, various speed changes are generated to create torques, thereby releasing energy that is multiple times of a primitive energy for the starting system. Speed change and energy are then utilized to urge the generator to reach the rated speed and energy for generating electricity, and simultaneous rotation of the weight system is also utilized to generate multifold energy for counterbalancing the load of generating and the load of consumption of electricity of the generator, thereby allowing normal operation of the generator. A portion of electricity generated by the generator is supplied to the starting system. At this time, the starting energy supplied to the generator is cut off to allow self-operation of the generator for generating purposes.

## Description

The present invention relates to an energy-saving environmentally friendly generator. More particularly, the present invention relates to an energy-saving environmentally friendly generator that can store electrical energy additional to that required for self-operation.

Electrical energy is important in modem societies. Most of devices and objects used in our daily lives are driven by electricity. Traditional ways for generating electrical energy involves conversion of energy. For example, heat energy is converted into electrical energy in generators using fire power, and potential energy is converted into electrical energy in generators using water power and wind power. Loss including heat and friction occurs during the energy conversion.

A typical generator creates induction current through electromagnetic induction. The induction current is supplied to a device for use or stored in a storage device for future use. For creating the induction current, a rotor in the generator must be driven and induced with an adjacent magnetic member. Driving the rotor requires a starting system such as a small engine fueled by diesel oil or gasoline. Namely, the diesel oil or gasoline is consumed to run the engine for driving the rotor to turn, and the kinetic energy of the rotor is converted into potential energy for output.

Hence, traditional equipments for generating electricity keep on converting energy in various forms into electrical energy through various converting methods. Thus, the traditional equipments for generating electricity require continuous supply of external resources. Fire power generators and small generators require fuel that will cause pollution when combusted. Water power generators and wind power generators are limited on climates and geographical conditions. These drawbacks and/or limitations should be overcome.

The primary objective of the present invention is to provide an energy-saving environmentally friendly generator for solving the drawbacks of conventional generating methods.

An energy-saving environmentally friendly generator in accordance with the present invention comprises at least one generator for generating electricity, at least one weighting system, at least one transmission gear system, at least one starting system, and at least one electricity-conveying system.

The generator is started to generate electricity. Based on the principle of relative theory of large/small gears and through use of transmission gears of various sizes in the transmission gear system, various speed changes are generated to create torques, thereby releasing energy that is multiple times of a primitive energy for the starting system. Speed change and energy are then utilized to urge the generator to reach the rated speed and energy for generating electricity, and simultaneous rotation of the weight system is also utilized to generate multifold energy for counterbalancing the load of generating and the load of consumption of electricity of the generator, thereby allowing normal operation of the generator. A portion of electricity generated by the generator is supplied to the starting system. At this time, the starting energy supplied to the generator is cut off to allow self-operation of the generator for generating purposes.

By such an arrangement, a portion of electricity generated by the generator is supplied to the starting system to maintain normnal operation of the energy-saving environmentally friendly generator in accordance with the present invention, and the remaining electricity is output for use, thereby meeting the environmental protection purposes of no pollution.

Other objectives, advantages, and novel features of the invention will become more apparent from the following detailed description when taken in conjunction with the accompanying drawings.
Fig. 1 is a schematic diagram illustrating a first embodiment of an energy-saving environmentally friendly generator in accordance with the present invention.
Fig. 2 is a schematic diagram illustrating a second embodiment of the energy-saving environmentally friendly generator in accordance with the present invention.

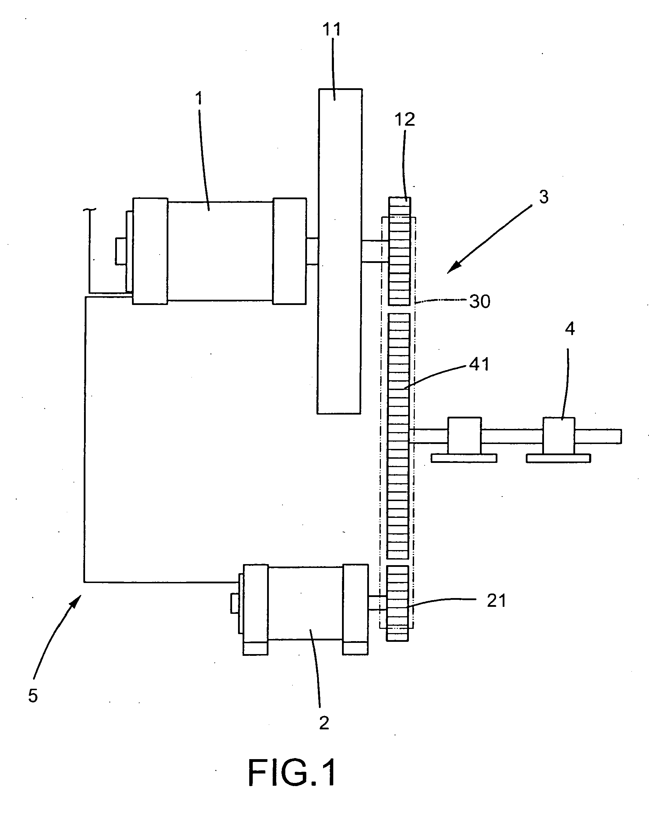

Referring to Fig. 1, a first embodiment of an energy-saving environmentally friendly generator in accordance with the present invention comprises at least one generator 1, at least one weighting system 11 mounted to the generator 1, at least one transmission gear system 3 for driving the generator 1, at least one starting system 2 for driving the transmission gear system 3, and at least one electricity-conveying system 5. The transmission gear system 3 includes a plurality of transmission gears 12, 21, and 41 of various sizes and a transmission gear train 30. The transmission gear system 3 may be driven by gears, sprockets, or pulleys.

The weighting system 11 may be at least one flywheel coaxially mounted on a rotor shaft (not labeled) of the generator 1. The transmission gear system 3 is mounted between the generator 1 and the starting system 2. The transmission gears of the transmission gear system 3 includes at least a transmission gear 12 coaxially mounted on the rotor shaft of the generator 1, a transmission gear 21 coaxially mounted on a rotational shaft (not labeled) of the starting system 2, and a transmission gear 41 mounted on a rotational shaft (not labeled) of a supporting wheel frame 4. An output end of the generator 1 is electrically connected via the electricity-conveying system 5 to an input end of the starting system 2 for conveying the electricity generated by the generator 1 to the starting system 2, thereby maintaining continuous operation of the whole set of the generator.

The generator 1 of the energy-saving environmentally friendly generator includes an engine that can be started by fuels. The generator 1 is started to generate electrical energy while driving the weighting system 11 and the starting system 2 to run. Multifold kinetic energy is generated to counterbalance the load of generating and the load of consumption of electricity of the generator 1. Further, through the electricity-conveying system 5, a portion of electricity is supplied to the starting system 2, allowing the starting system 2 to drive the transmission gear system 3, which, in turn, based the principle of relative theory of large/small gears and through use of the transmission gears 12, 21, and 41 of various sizes and speeds, creates torques and releases energy that is multiple times of the primitive energy of the starting system 2. Then, variation in rotational speeds is provided. Namely, after the multifold energy is released, the speed of the generator 1 is varied (i.e., the speed is increased). When the generator 1 reaches the rated speed and energy for generating while the weighting system 11 is rotating simultaneously, the weighting system 11 generates multifold energy due to gravitational rotation for counterbalancing the load of generating and the load of electricity consumption of the generator 1. At this time, the engine (the energy source for starting the generator 1) can be shut down while maintaining normal operation.

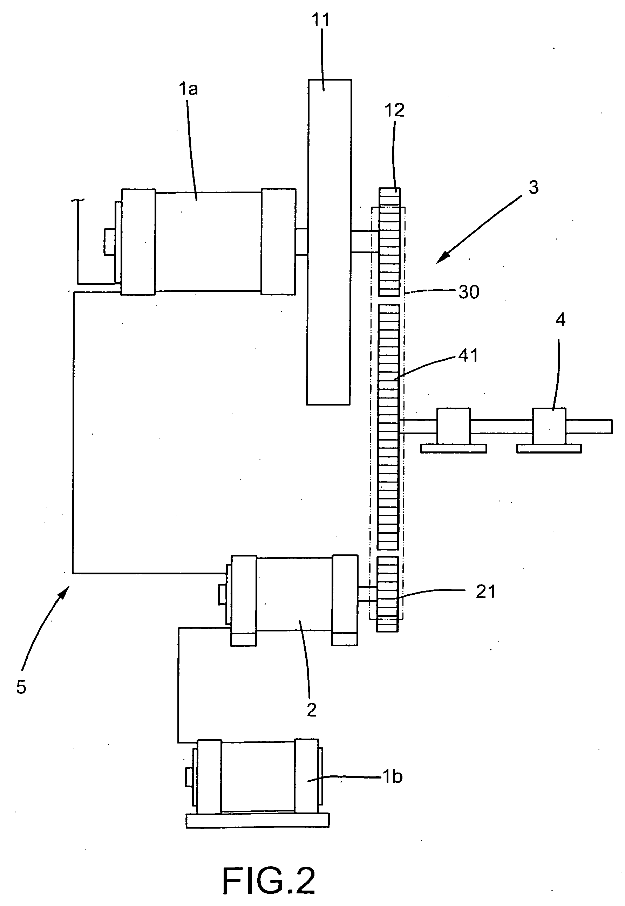

Fig. 2 shows a second embodiment of the energy-saving environmentally friendly generator in accordance with the present invention. In this embodiment, the energy-saving environmentally friendly generator comprises a first generator 1a, a second generator 1b, at least one weighting system 11 mounted to the first generator 1 a, at least one transmission gear system 3 for driving the first generator 1a, at least one starting system 2 for driving the transmission gear system 3, and at least one electricity-conveying system 5. An output end of the first generator 1a and an output end of the second generator 1b are electrically connected via the electricity-conveying system 5 to an input end of the starting system 2.

The weighting system 11 may be at least one flywheel coaxially mounted on a rotor shaft (not labeled) of the first generator 1a. The transmission gear system 3 is mounted between the first generator 1a and the starting system 2. The transmission gears of the transmission gear system 3 includes at least a transmission gear 12 coaxially mounted on the rotor shaft of the first generator 1a, a transmission gear 21 coaxially mounted on a rotational shaft (not labeled) of the starting system 2, and a transmission gear 41 mounted on a rotational shaft (not labeled) of a supporting wheel frame 4. The first generator 1a is a generator without engine. The second generator 1b is a generator with an engine for self-operation.

In this embodiment, the engine of the second generator 1b is started for self-operation, and the electricity is conveyed via the electricity-conveying system 5 to the starting system 2, which, in turn, drives the transmission gear system 3 including transmission gears of various sizes. Based the principle of relative theory of large/small gears, energy that is multiple times of the primitive energy of the starting system 2 is released after passing through the transmission gears 12, 21, and 41 of various sizes and speeds for creating torques. The speed is then varied. Namely, the rotational speed of the first generator 1a is varied after the multifold energy is released. When the first generator 1a reaches the rated speed and energy for generating while the weighting system 11 is rotating simultaneously, the weighting system 11 generates multifold energy due to gravitational rotation for counterbalancing the load of generating and the load of electricity consumption of the first generator 1a. At this time, the engine of the second generator 1b can be shut down while maintaining normal operation of the first generator 1a.

According to the above embodiments of the energy-saving environmentally friendly generator, when the generator 1 or the first generator 1a is in normal generating operation, a portion of electricity is conveyed to the starting system 2 via the electricity-conveying system 5, and the starting energy supplied to the generator 1 or the second generator 1b can be cut off while providing sufficient electricity for maintaining normal operation of the starting system 2. Thus, normal operation of the energy-saving environmentally friendly generator in accordance with the present invention can be maintained while allowing output of surplus electricity, which meets the environmental protection purposes of no pollution.

The following description further supports the present invention. Conventionally, the kinetic energy for starting the generator 1 is about 2 or 3 times of that for the starting system 2. Namely, 20-30 KW is required for starting the generator 1 when the starting system 2 is directly used to drive the generator 1. Hence, it is impossible to practice under the same horsepower.

The present invention is featured by utilizing a small-power starting system 2 to drive a large-power generating system 1. The present invention utilizes the principle of relative theory of large/small gears and through use of the transmission gear system 3 having a plurality of transmission gears 12, 21, and 41 of various sizes to create torques through changes in rotational speeds, releasing energy that is multiple times of the primitive energy of the starting system. Speed change is then applied to reach the required rated speed and energy for the generator 1 while simultaneously turning the weighting system. Multifold energy is generated to counterbalance the load of generating and the load of electricity consumption of the generator, thereby maintaining normal operation of the generator. Meanwhile, a portion of the electricity generated during operation is supplied to the starting system 2, and the surplus electricity can be output for use.

For example, given the generating capacity of the generator is 10 KW, a starting system 2 requiring a starting power of 4 KW can be selected. Thus, when the generator 1 generates 10 KW under normal operation, 4 KW of the 10 KW is supplied to the starting system 2 via the electricity-conveying system 5, and the remaining 6 KW can be output for use.

Although specific embodiments have been illustrated and described, numerous modifications and variations are still possible without departing from the essence of the invention. The scope of the invention is limited by the accompanying claims.

## Claims

1. An energy-saving environmentally friendly generator comprising:
at least one generator (1; 1a, 1b) for generating electricity;
at least one weighting system (11) coaxially mounted to a rotor shaft of the generator;
at least one transmission gear system (3) including a plurality of transmission gears (12, 21, and 41) of various sizes and a transmission gear train (30);
at least one starting system (2), said starting system utilizing said transmission gear system to transmit energy and creating torques based on principle of relative theory of large/small gears, thereby releasing energy that is multiple times of a primitive energy for the starting system, speed change and energy being then utilized together with simultaneous rotation of the weight system to generate multifold energy for counterbalancing the load of generating and the load of consumption of electricity of the generator, thereby maintaining normal operation of said generator; and
at least one electricity-conveying system (5) connected between an output end of said generator and an input end of the starting system;
wherein when said generator reaches a rated speed and energy for generating electricity, a portion of electricity generated by said generator is supplied to said starting system to maintain normal operation of said generator and the starting energy supplied to said generator is cut off, and the remaining electricity is output for use.

2. The energy-saving environmentally friendly generator as claimed in claim 1 wherein the transmission gear train (30) is driven by gears, sprockets, or pulleys.

3. The energy-saving environmentally friendly generator as claimed in claim 1 wherein the weighting system (11) includes at least a flywheel.

4. The energy-saving environmentally friendly generator as claimed in claim 1 further comprising a second generator (1b) including an engine for self-operation.

5. The energy-saving environmentally friendly generator as claimed in claim 1 wherein the energy-saving environmentally friendly generator comprises a first generator (1a) connected to the weighting system (11) and a second generator (1b), the second generator (1b) including an engine for self-operation, an output end of the first generator (1a) and an output end of the second generator (1b) being electrically connected to an input end of the starting system (2) via the electricity-conveying system (5).
